# EUROPEAN PATENT APPLICATION

(11) **EP 2 285 048 A1**
(43) Date of publication of application: **16.02.2011**
(21) Application number: 09251937.0
(22) Date of filing: 05.08.2009
(51) Int. Cl.: H04L 12/28, G06F 17/30

(54) **Data management**

(71) Applicant: DAD Solutions Limited, Bagshot Surrey GU19 5AH (GB)
(72) Inventor: Ranger, Julian, Crondall, Farnham Surrey, GU10 5QQ (GB)
(74) Representative: Downing, Michael Philip

(57) **Abstract**

A system for the management of digital data suitable for a home environment is disclosed. Such a data storage system comprises a plurality of networked computing devices, each with at least one associated data storage unit, each computing device being provided with management software and an XML schema and XML document database, each XML document database containing (i) records defining specific area of the associated data storage unit which are to be shared with other computing devices, (ii) records for files located within the associated data storage unit which including, at least, file location data and file type data, and (iii) records for files located on other data storage units, the software being adapted to synchronise the databases by, for each database, (a) providing records of files located within the associated data storage unit to the remaining databases, and (b) receiving records from other databases and storing them as records of files located on other data storage units. In this way, a number of files that are distributed over a number of devices can, effectively, be brought together to form a single file structure that is accessible, within limits set by the file owners, to all users on the system. Thus, a more efficient digital data storage system is created in which files are easier to locate, less extensive (and/or less frequent) file replication is needed, and in which all users are able to find the files that are of use to them. At the same time, this structure is made available in a form that is suited to a home network without requiring additional hardware and/or the adoption of a formal server/client architecture and the associated management & maintenance overhead.

## Description

### FIELD OF THE INVENTION

The present invention relates to a data management system, especially one suited for use in an environment without formal Information Technology technical support, such as the home or small office or larger offices wishing to reduce their IT support overheads.

### BACKGROUND ART

Technology in the home is no longer an unusual sight; quite the opposite. Ten years ago, personal computers were becoming an increasingly common sight in the home, driven principally by increasing use of the Internet for email and web use. Since then, this trend has continued and such technology is a routine and essential resource in an affluent Western home.

As such technology becomes more widely available for use, it likewise becomes more convenient to use and hence a wider range of devices become integrated with it. The process of technological convergence contributes to this; devices that had previously been stand-alone devices acquire the ability to connect to and interact with computing devices. A common example is the mobile phone, which would once have held only a limited number of contact numbers on an inaccessible internal database, and which will now synchronise with a central contacts database, take photographs and transfer these to the computing device, and download a music/video database from the computing device to play or view via the mobile telephone.

A household with a single computer, a single simple mobile phone, a single digital camera and a single portable music player will find it relatively easy to manage the files that this arrangement will require and will produce. However, many households are now significantly beyond this level of complexity, and many more can be expected to move beyond this in the near future. The management of multiple computers, each with their own storage arrangement and (possibly) with access to shared storage, multiple "smart" mobile phones, multiple digital cameras and multiple portable music players is exponentially more difficult.

Existing applications do not address this problem holistically. Instead, proprietary solutions such as iTunes, Nokia Music Manager, iPhoto and the like create a unique environment centred around a single file type or a single device. Whilst they assist in the management of that file type or device, they make the management of multiple devices and file types more complex. They also do not address issues surrounding multiple users across the network.

Various online services allow the storage and retrieval of a user's files, or a group of user's files, but all require the files concerned to be uploaded to a third party site. This introduces obvious privacy concerns, and places significant demands on bandwidth.

EP-A-1,862,917 describes a system for managing files across multiple devices and ensuring that the user's choice of files is available on the correct device in the correct format. However, it assumes that all users on the system have access to all files. Accordingly, whilst it provides a useful advance in the management of such data, it is not a complete solution to the above-described problem.

### SUMMARY OF THE INVENTION

The present invention therefore seeks to provide a system suitable for the management of digital data in a home environment. It therefore provides a data storage system, comprising a plurality of networked computing devices, each with at least one associated data storage unit, each computing device being provided with management software and a database, each database containing (i) records defining at least one specific area of the associated data storage unit which are to be shared with other computing devices, (ii) records for files located within the associated data storage unit which including, at least, file location data and file type data, and (iii) records for files located on other data storage units, the software being adapted to synchronise the databases by, for each database, (a) providing records of files located within the associated data storage unit to the remaining databases, and (b) receiving records from other databases and storing them as records of files located on other data storage units.

The database is preferably expressed via an XML schema and XML document, although other forms of database are possible.

In this way, a number of files that are distributed over a number of devices can, effectively, be brought together to form a common file structure that is accessible, within limits set by the file owners, to all users on the system. Thus, a more efficient digital data storage system is created in which files are easier to locate, less extensive (and/or less frequent) file replication is needed, and in which all users are able to find the files that are of use to them. At the same time, this structure is made available in a form that is suited to a home network without requiring additional hardware and/or the adoption of a formal server/client architecture and the associated management & maintenance overhead.

Portable digital media devices (i.e. devices comprising a digital storage means for holding a plurality of digital media files) such as MP3 players and the like may be brought within the system by being associated with one of the computing devices, the portable digital media device and the computing device comprising software arranged to synchronise the plurality of digital media files with a replica set of files held in the associated data storage unit of the computing device, and the database of the computing device containing a record designating at least part of the area of the replica set as a shared area. In that way, the files on the portable device can be made available to the other devices within the system

There is preferably a means for detecting duplicate files. Records for files located on other data storage units that relate to duplicate files are presented to the user to allow the selection of their removal or deletion from at least that part of the database, or alternatively they can be tagged as duplicates or as formal archived or backup copies of the files.

The databases can contain file content data, such as metadata stored within the relevant file and/or user-supplied contextual data. The metadata is ideally structured formally and compatible with standard metadata formats such as EXIF, GPS, IPTC, XMP, JFIF, GeoTIFF, ICC Profile, Photoshop IRB, FlashPix, AFCP, ID3 and others. The schema can be populated with existing metadata tags associated with the files, and will ideally permit further population via user input, termed contextual data. Such data can be useful when reviewing the available files, and can be used for searching and classification of files. It can also be made accessible to any other program or application on the system, and so reduce the problem of "data islands" in which metadata formats supported by one application cannot be read or accessed by another program.

### BRIEF DESCRIPTION OF THE DRAWINGS

An embodiment of the present invention will now be described by way of example, with reference to the accompanying figures in which;
Figure 1 shows a possible physical layout of the system; and
Figure 2 shows a method of marking directories.

### DETAILED DESCRIPTION OF THE EMBODIMENTS

The present invention is a database-based product which is intended to address the difficulties set out above. Installed on a number of different computing devices within the same network (such as family network), each local installation of the software is given access to the storage associated with that device, or limited parts thereof, in order to scan the storage area for files and documents that are to be included within the database. The product also provides the same functionality across an extended network via communications across the Internet using peer-to-peer data synchronisation supported by a web service.

Filters are defined for the software which define the files that the software is permitted to scan. These filters can be relatively coarse grained, e.g. defining the file types and directory paths to be scanned, or can be set to a greater level of fidelity by filtering against any combination of the metadata/contextual data tags or other rules. This enables the owner or user of a particular device to define which files may be included within the database directory and which files may not.

Within the directories and file types that may be scanned, these are then given a further choice to decide what is private, i.e. to be only viewable by that user, what is public, i.e. to be viewable by any user on a system, or viewable by specific users, and which document is opened to publication on public channels such as specific websites and web services. These rules can be set up on the basis of file type, directory structures, user groups and any combination of the metadata/contextual data tags contained in the schema or other rules. Default rules are provided which err on the side of privacy rather than publication.

A database is then constructed which, for each device, holds details of music, video, pictures, contacts, ebooks, calendar structures, and other files, together with the metadata associated with those files. Many open metadata formats exist such as GBX, ID3 and EXIF, and these details can be incorporated within suitable fields within the database. In addition, user generated "context data" can be incorporated, such as tags, links, playlists and thumbnails. The database is stored in an XML ("extensible markup format") format, and is therefore readily transferable between machine types, as there may be a number of different machine types on the same network.

The database constructed from the data storage device of the individual computing device is then synchronized with corresponding databases on all other intelligent devices on the network, i.e. all devices having a processor and on which the software is installed. Those other devices therefore retain the relevant details of files located on other devices, where access to this information is permitted.

In this way, information relating to the files that are available on the network and their content is distributed across the network in line with privacy rules set by the owners of each file, who must (via the appropriate settings) consent to that distribution of information.

The software supports the queue and transfer of files requested individually or as a set or by rules set up by the user. This allows requests for data to be created even when the host system for a file is not available on the network (e.g. has been temporarily disconnected). When the host system becomes available the stored request is passed to it, allowing the requested file to be made available.

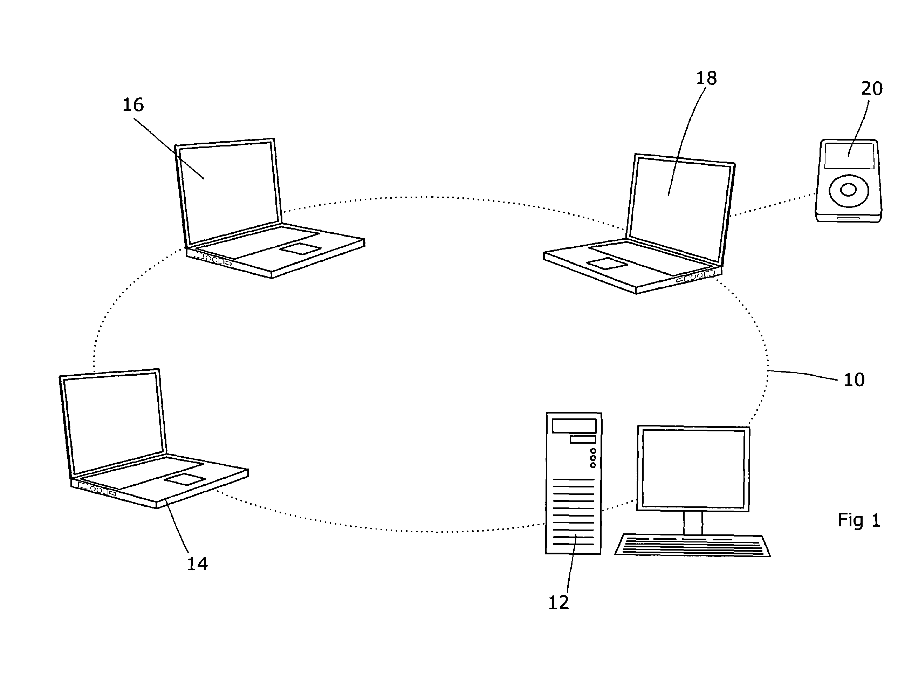

By way of example, the process of adding a new device to the system can be described. Figure 1 shows the home network 10 to which is connected a personal computing device or home server 12 and two existing laptops 14, 16. Other devices may also be present on the network 10, such as printers and storage media, together with routers, modems and other forms of internet access. The network itself may be a wired network, or a wireless network, or a combination of both. In this example, a further laptop 18 is to be added. For the purpose of illustration, this laptop 18 has an associated mp3 player 20 with which it synchronises a set of audio files.

The relevant software is installed onto the new laptop 18, and the first step is to define the user's identity. The user will give a name or other identifier, together with a verification such as a password, pin number, or other security validator. The software then synchronises its user data with the databases held on the other devices 12, 14, 16 to either add the new user to those databases or to validate the user against those databases if the user identifier matches an existing identifier.

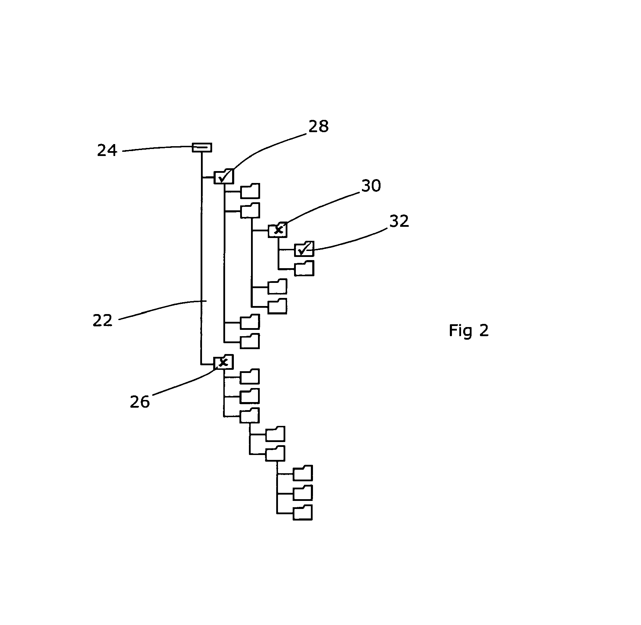

The user is then asked to define areas on the storage areas of the new laptop 18 to which other users on the network might have access. As shown in figure 2, a directory structure 22 is displayed allowing the user to select regions of the storage unit 24 for inclusion in or exclusion from the database. This, one folder 26 is wholly excluded from the database as the user has inserted a cross via an appropriate means such as a drop-down selection associated with that folder. This may be a system folder, for example. All sub-folders within the system folder 26 the, by default, are also excluded. Another folder, such as a documents folder 28, is marked as being included within the database and its subfolders are then by default also included. The user has however marked a documents subfolder 30 as being excluded; its contents and subfolders are thereby excluded, apart from the contents of one sub-subfolder 32 which is included (together with any sub-folders that may be within it).

Thus, the rule is that with the folders laid out in the conventional manner shown in figure 2, the first indication reached when travelling leftwards and upwards dictates whether a file or folder is included. In this way, by designating folders as included or excluded, the user can be given complete control over what is included in the database. Accordingly, the user's consent is obtained prior to inclusion of file details.

The software may start from a default of no folders being included, or from document folders only (not system folders), or otherwise as desired.

The user is then presented with a list of the users recognised by the software. In respect of each other user, the local user can then grant permissions to the other users to view details of all, none, or selected files. If permission is granted to view selected files only, then permission can be granted for entire folders or for selected files within folders based upon the metadata/contextual data, in a manner similar to the selection of folders above.

The software then scans the permitted areas and produces a list of files. These files are added to the local database as described above.

The software then synchronises the local database with other databases held in a like manner on the other devices 12, 14, 16 on the network 10. Where permission has been granted to the user associated with a different device to see the file details, the record pertaining to a particular file is provided to the database held on that device. Equally, if there are any records held on other databases for which the local user has been granted access, these records will be provided to the local database.

The databases will then re-synchronise periodically. If any files have been added or any permissions changed, then records may be added to or deleted from the various databases as required. If the local user was a new user, then in time other users may grant permissions to the new user with the result that file details will begin to be provided to the local database. A resynchronisation may also be triggered if folders and/or permissions are added or removed.

It was mentioned that the new laptop 18 had an associated mp3 player 20 with which it synchronised a collection of audio (and possibly other) files. Generally, this is done via proprietary software provided by the manufacturer of the mp3 device, such as Apple™ iTunes™. This can operate in parallel with the present invention, as such software creates a folder on the device 18 which contains a replica of the data held on the mp3 device. Thus, by designating the replica folder on the device 18, the user can (if they wish) grant permission to include the files held on the mp3 device without having to interfere with the operation of the mp3 device.

In this way, users can discover the location of specific files, searching across all devices on the network to which they have been granted permission. The location of stored backups, images, audio and the like can be ascertained, avoiding duplicate purchases and preventing the accidental loss of files.

It will of course be understood that many variations may be made to the above-described embodiment without departing from the scope of the present invention.

## Claims

1. A data storage system, comprising;
a plurality of networked computing devices, each with at least one associated data storage unit, each computing device being provided with management software and a database,
each database containing;
records defining specific area of the associated data storage unit which are to be shared with other computing devices;
records for files located within the associated data storage unit which including, at least, file location data and file type data, and
records for files located on other data storage units;
the software being adapted to synchronise the databases by, for each database, (a) providing records of files located within the associated data storage unit to the remaining databases, and (b) receiving records from other databases and storing them as records of files located on other data storage units.

2. A data storage system according to claim 1 in which the database in an XML format and comprises an XML schema and XML document database, each XML schema defining the legal building blocks of the XML document database including the included elements and attributes and their allowed structure.

3. A data storage system according to claim 1 or claim 2 in which there is at least one portable digital media device associated with one of the computing devices, the portable digital media device comprising a digital storage means for holding a plurality of digital media files and the computing device comprising software arranged to synchronise the plurality of digital media files with a replica set of files held in the associated data storage unit of the computing device, the database of the computing device containing a record designating at least part of the area of the replica set as a shared area.

4. A data storage system according to any one of claims 1 to 3 in which the databases further contain file content data.

5. A data storage system according to claim 4 in which the file content data comprises metadata stored within the relevant file.

6. A data storage system according to claim 4 or claim 5 in which the file content data comprises user-supplied contextual data.

7. A data storage system according to any one of the preceding claims further comprising a means for detecting duplicate files within the database.

8. A data storage system according to claim 7 in which records for files located on other data storage units that relate to duplicate files are highlighted.

9. A data storage system according to claim 8 in which duplicate files are highlighted to the user to allow their removal from at least that part of the database.

10. A data storage system according to claim 8 or claim 9 in which duplicate files are highlighted to the user to allow them to be tagged as duplicates.

11. A data storage system according to any one of claims 8 to 10 in which duplicate files are highlighted to the user to allow them to be tagged as archived backup copies of the files.

12. A data storage system according to any one of the preceding claims further comprising a means for the transfer of files requested by a user between different storage media.

13. A data storage system according to claim 12 in which a request for transfer is stored and subsequently actioned on a host system when the requested file becomes available.

14. A data storage system according to any one of the preceding claims which provides peer-to-peer data synchronisation across an extended network via communications across the Internet.
